# EUROPEAN PATENT APPLICATION

(11) **EP 4 503 203 A1**
(43) Date of publication of application: **05.02.2025**
(21) Application number: 22934085.6
(22) Date of filing: 30.03.2022
(51) Int. Cl.: H01M 4/64

(54) **ELECTROCHEMICAL DEVICE COMPRISING PROTECTIVE LAYER, AND ELECTRONIC DEVICE**

(71) Applicant: Ningde Amperex Technology Limited, Ningde, Fujian 352100 (CN)
(72) Inventor: HAN, Dongdong, Ningde, Fujian 352100 (CN); ZHANG, Qingwen, Ningde, Fujian 352100 (CN); LIU, Xiaoqian, Ningde, Fujian 352100 (CN)
(74) Representative: Icosa
(86) International application number: PCT/CN2022/084049
(87) International publication number: WO 2023/184233

(57) **Abstract**

This application relates to an electrochemical device. The electrochemical device includes a positive electrode, where the positive electrode includes a positive electrode current collector, a first protective layer, and a first positive electrode active material layer. The positive electrode current collector includes a first surface and a second surface opposite to each other, and the first protective layer is disposed between the first surface and the first positive electrode active material layer. The first surface includes a first region and a second region, where the first region is provided with the first positive electrode active material layer, and the second region is not provided with the first positive electrode active material layer. An area of the first region is A1 cm², an area of the second region is A2 cm², and an area of the first protective layer is A3 cm², satisfying: 0.5≤A3/(A1+A2)≤1. The electrochemical device of this application has significantly improved safety performance.

## Description

### TECHNICAL FIELD

This application relates to the field of energy storage, and specifically, to an electrochemical device including a protective layer, and an electronic device.

### BACKGROUND

With popularity of electronic products such as notebook computers, mobile phones, handheld game consoles, and tablet computers, safety requirements for electrochemical devices (for example, lithium-ion batteries) are also increasingly high. However, at present, during the use of lithium-ion batteries, there are still safety accidents such as fires and explosions caused by impacts or punctures due to external forces, which limits the extensive application of the lithium-ion batteries. Short circuits between positive electrode current collectors (for example, aluminum foils) and negative electrode active material layers are the most likely to cause safety incidents. Therefore, there is an urgent need for a technical means to improve the safety performance of lithium-ion batteries.

### SUMMARY

According to an aspect of this application, this application provides an electrochemical device including a positive electrode, where the positive electrode includes a positive electrode current collector, a first protective layer, and a first positive electrode active material layer. The positive electrode current collector includes a first surface and a second surface opposite to each other. The first protective layer is disposed between the first surface and the first positive electrode active material layer. The first surface includes a first region and a second region, where the first region is provided with the first positive electrode active material layer, and the second region is not provided with the first positive electrode active material layer. An area of the first region is A1 cm², an area of the second region is A2 cm², and an area of the first protective layer is A3 cm², satisfying: 0.5≤A3/(A1+A2)≤1. When 0.5≤A3/(A1+A2)≤1 is satisfied, the first surface of the positive electrode current collector can be sufficiently protected by the first protective layer. In a process of being subjected to impacts or punctures due to external forces, the first protective layer can isolate the conduction between the positive electrode current collector and a negative electrode active material layer, thereby suppressing the occurrence of the most dangerous short circuit between the positive electrode current collector and the negative electrode active material layer, and improving the safety performance of the electrochemical device.

In some embodiments, the positive electrode is a wound structure, the wound structure includes a winding start end located on an inner side of the wound structure and a winding termination end located on an outer side of the wound structure, the second region is located at the winding termination end, and 0<A2/A1≤0.2. In this case, the second region is located on the outer side of the wound structure. In the process of being subjected to impacts or punctures due to external forces, even if a short circuit occurs in the second region, the second region has a long electron conduction path due to the absence of the positive electrode active material layer on its surface, which can reduce the short circuit current, thereby reducing the risks of fires and explosions in the electrochemical device.

In some embodiments, an area of the first protective layer on the first region is B1 cm², satisfying: 0.8≤B1/A1≤1. When a puncturing object pierces the first region, if a short circuit occurs between the positive electrode current collector and the negative electrode active material layer, due to the presence of the positive electrode active material layer on the first region, the electron conduction path is short in this case, and the instantaneous short circuit current will be excessively high, so that fires and explosions are easily caused. When 0.8≤B1/A1≤1 is satisfied, the first region of the positive electrode current collector can be sufficiently protected by the first protective layer, suppressing the occurrence of a short circuit between the positive electrode current collector and the negative electrode active material layer in the first region, thereby improving the safety performance of the electrochemical device.

In some embodiments, an area of the protective layer on the second region is B2 cm², satisfying: 0.5≤B2/A2≤1. In this case, the second region can be sufficiently protected by the first protective layer, suppressing the occurrence of a short circuit between the positive electrode current collector and the negative electrode active material layer in the second region, thereby improving the safety performance of the electrochemical device.

In some embodiments, the positive electrode further includes a second positive electrode active material layer and a second protective layer located between the second surface and the second positive electrode active material layer; the second surface includes a third region opposite to the first region and a fourth region opposite to the second region; and an area of the second protective layer on the third region is C1, and an area of the second protective layer on the fourth region is C2, satisfying: 0.8≤C1/A1≤1, and/or 0.5≤C2/A2≤1. In this case, the second region and/or the fourth region can be sufficiently protected by the second protective layer, reducing the risk that a separator is pierced by burrs formed on the second surface where the positive electrode current collector is pierced in the puncture process, which otherwise leads to the most dangerous short circuit between the positive electrode current collector and the negative electrode active material layer, thereby improving the safety performance of the electrochemical device.

In some embodiments, in a fully charged state of the electrochemical device, a resistance value of the positive electrode in the first region is R1, and a resistance value of the positive electrode in the second region is R2, satisfying: 1.5≤R1≤10.5; and/or 1≤R2≤10. In this case, the electrochemical device can have both excellent electrochemical performance and safety performance.

In some embodiments, the first protective layer includes first inorganic particles, a first binder, and a first conductive agent.

In some embodiments, the second protective layer includes second inorganic particles, a second binder, and a second conductive agent.

In some embodiments, the first binder and/or the second binder satisfies at least one of the following characteristics: (1) a polymer formed by at least one of acrylic acid, acrylamide, acrylate salt, acrylonitrile, or acrylate ester is included; or (2) at least one of carboxymethyl cellulose salt or nitrile rubber is included.

In some embodiments, the first binder and/or the second binder is a water-based binder.

In some embodiments, the first inorganic particles and/or the second inorganic particles include at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, diaspore, barium sulfate, calcium sulfate, or calcium silicate.

In some embodiments, the first conductive agent and/or the second conductive agent includes at least one of a lamellar conductive agent, a reticular conductive agent, a fibrous conductive agent, or a particulate conductive agent.

In some embodiments, based on a mass of the first protective layer, a mass percentage of the first inorganic particles is 60% to 99%. In some embodiments, based on the mass of the first protective layer, a mass percentage of the first binder is 0.5% to 22%. In some embodiments, based on the mass of the first protective layer, a mass percentage of the first conductive agent is 0.1% to 11%.

In some embodiments, based on a mass of the second protective layer, a mass percentage of the second inorganic particles is 60% to 99%. In some embodiments, based on the mass of the second protective layer, a mass percentage of the second binder is 0.5% to 22%. In some embodiments, based on the mass of the second protective layer, a mass percentage of the second conductive agent is 0.1% to 11%.

In some embodiments, the first protective layer further includes a first leveling agent, and/or the second protective layer further includes a second leveling agent.

In some embodiments, based on the mass of the first protective layer, a mass percentage of the first leveling agent is greater than 0% and less than or equal to 5%. In some embodiments, based on the mass of the second protective layer, a mass percentage of the second leveling agent is greater than 0% and less than or equal to 5%.

In some embodiments, the first leveling agent and/or the second leveling agent includes at least one of a siloxane compound, a siloxane derivative, an oxygen-containing olefin polymer, a carboxylate ester compound, a carboxylate salt compound, an alcohol compound, an ether compound, or a fluorocarbon compound.

According to another aspect of this application, this application further relates to an electronic device including the electrochemical device according to any one of the foregoing embodiments.

### BRIEF DESCRIPTION OF DRAWINGS

FIG. 1 shows a positive electrode of an electrochemical device according to some embodiments of this application.
FIG. 2 shows a positive electrode of an electrochemical device according to some embodiments of this application.
FIG. 3 shows a positive electrode of an electrochemical device according to some embodiments of this application.

### DESCRIPTION OF EMBODIMENTS

The following describes this application in detail. It should be understood that the terms used in the specification and appended claims should not be interpreted as being limited to their general and dictionary meanings, but should be interpreted based on the meanings and concepts corresponding to the technical aspects of this application, in accordance with the principle that the inventors are allowed to define the terms appropriately for optimal explanation. Therefore, the descriptions shown in some embodiments described in the specification are merely specific examples for illustrative purposes, but are not intended to show all technical aspects of this application. In addition, it should be understood that various optional equivalents and variations can be made when this application is filed.

In the specific embodiments and claims, a list of items connected by the term "and/or" may mean any and all combinations of one or more of the related listed items. For example, if items A and B are listed, the phrase "A and/or B" means only A; only B; or A and B. In the specific embodiments and claims, a list of items connected by the terms "at least one of", "at least one piece of", "at least one kind of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may include a single component or a plurality of components. The item B may include a single component or a plurality of components. The item C may include a single component or a plurality of components.

In addition, quantities, ratios, and other values are sometimes presented in the format of range in this specification. It should be understood that such format of range is used for convenience and simplicity and should be flexibly understood as including not only values explicitly designated as falling within the range but also all individual values or sub-ranges covered by the range as if each value and sub-range are explicitly designated.

### I. Electrochemical device

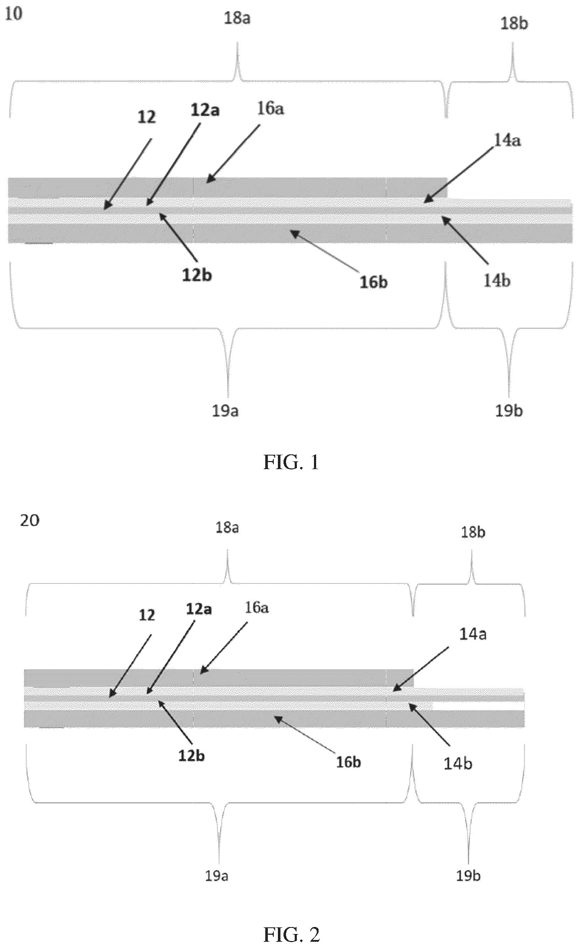

FIG. 1 shows a positive electrode 10 of an electrochemical device according to some embodiments of this application. The positive electrode 10 includes a positive electrode current collector 12, a first protective layer 14a, a second protective layer 14b, a first positive electrode active material layer 16a, and a second positive electrode active material layer 16b. The positive electrode current collector includes a first surface 12a and a second surface 12b opposite to each other. The first protective layer 14a is disposed between the first surface 12a and the first positive electrode active material layer 16a. The second protective layer 14b is disposed between the second surface 12b and the second positive electrode active material layer 16b. The first surface 12a includes a first region 18a and a second region 18b, the first region 18a is provided with the first positive electrode active material layer 16a, and the second region 18b is not provided with the first positive electrode active material layer 16a.

In some embodiments, an area of the first region 18a is A1 cm², an area of the second region 18b is A2 cm², and an area of the first protective layer 14a is A3 cm², satisfying: 0.5≤A3/(A1+A2)≤1. When 0.5≤A3/(A1+A2)≤1 is satisfied, the first surface 12a of the positive electrode current collector 12 can be sufficiently protected by the first protective layer 14a. In a process of being subjected to impacts or punctures due to external forces, the first protective layer 14a can isolate the conduction between the positive electrode current collector 12 and a negative electrode active material layer, thereby suppressing the occurrence of the most dangerous short circuit between the positive electrode current collector and the negative electrode active material layer, and improving the safety performance of the electrochemical device. In these embodiments shown in FIG. 1, A3/(A1+A2) is equal to 1.

In some embodiments, 0.5≤A3/(A1+A2)≤1. In some embodiments, 0.8≤A3/(A1+A2)≤1. In some embodiments, A3/(A1+A2) is 0.5, 0.55, 0.6, 0.65, 0.7, 0.75, 0.8, 0.85, 0.9, 0.95, or 1, or falls within a range defined by any two of the foregoing values.

In some embodiments, the positive electrode is a wound structure, the wound structure includes a winding start end located on an inner side of the wound structure and a winding termination end located on an outer side of the wound structure, the second region 18b is located at the winding termination end, and 0<A2/A1≤0.2. In this case, the second region 18b is located on the outer side of the wound structure. In the process of being subjected to impacts or punctures due to external forces, even if a short circuit occurs in the second region 18b, the second region 18b has a long electron conduction path due to the absence of the positive electrode active material layer on its surface, which can reduce the short circuit current, thereby reducing the risks of fires and explosions in the electrochemical device. In some embodiments, A2/A1 is 0.01, 0.02, 0.03, 0.04, 0.05, 0.06, 0.07, 0.08, 0.09, 0.1, 0.12, 0.14, 0.16, 0.18, or 0.2, or falls within a range defined by any two of the foregoing values.

In some embodiments, an area of the first protective layer 14a on the first region 18a is B1 cm², satisfying: 0.5≤B1/A1≤1. In some embodiments, 0.8≤B1/A1≤1. In some embodiments, B1/A1 is 0.5, 0.55, 0.6, 0.65, 0.7, 0.75, 0.8, 0.85, 0.9, 0.95, or 1, or falls within a range defined by any two of the foregoing values. When a puncturing object pierces the first region 18a, if a short circuit occurs between the positive electrode current collector and the negative electrode active material layer, due to the presence of the first positive electrode active material layer 16a on the first region 18a, the electron conduction path is short in this case, and the instantaneous short circuit current will be excessively high, so that fires and explosions are easily caused. When 0.5≤B1/A1≤1 is satisfied, the first region 18a of the positive electrode current collector can be sufficiently protected by the first protective layer 14a, suppressing the occurrence of a short circuit between the positive electrode current collector and the negative electrode active material layer in the first region 18a, thereby improving the safety performance of the electrochemical device.

In some embodiments, an area of the protective layer 14a on the second region 18b is B2 cm², satisfying: 0.5≤B2/A2≤1. In some embodiments, B2/A2 is 0.5, 0.55, 0.6, 0.65, 0.7, 0.75, 0.8, 0.85, 0.9, 0.95, or 1, or falls within a range defined by any two of the foregoing values. In this case, the second region 18b can be sufficiently protected by the first protective layer, suppressing the occurrence of a short circuit between the positive electrode current collector and the negative electrode active material layer in the second region 18b, thereby improving the safety performance of the electrochemical device.

In some embodiments, the second surface 12b includes a third region 19a opposite to the first region 18a and a fourth region 19b opposite to the second region 18b; and an area of the second protective layer 16b on the third region 19a is C1, satisfying: 0.5≤C1/A1≤1. In some embodiments, C1/A1 is 0.5, 0.55, 0.6, 0.65, 0.7, 0.75, 0.8, 0.85, 0.9, 0.95, or 1, or falls within a range defined by any two of the foregoing values.

In some embodiments, an area of the second protective layer 16b on the fourth region 19b is C2, satisfying: 0.5≤C2/A2≤1. In some embodiments, C2/A2 is 0.5, 0.55, 0.6, 0.65, 0.7, 0.75, 0.8, 0.85, 0.9, 0.95, or 1, or falls within a range defined by any two of the foregoing values.

In this case, the third region 19a and/or the fourth region 19b can be sufficiently protected by the second protective layer 16b, reducing the risk that a separator is pierced by burrs formed on the second surface 12b where the positive electrode current collector is pierced in the puncture process, which otherwise leads to the most dangerous short circuit between the positive electrode current collector and the negative electrode active material layer, thereby improving the safety performance of the electrochemical device.

FIG. 2 shows a positive electrode 20 of an electrochemical device according to some embodiments of this application. A positive electrode 20 shown in FIG. 2 differs from that shown in FIG. 1 in that a portion of the fourth region 19b, opposite to the second region 18b, on the second surface 12b of the current collector 12 in the positive electrode 20 in FIG. 2 is not covered by the second protective layer 14b.

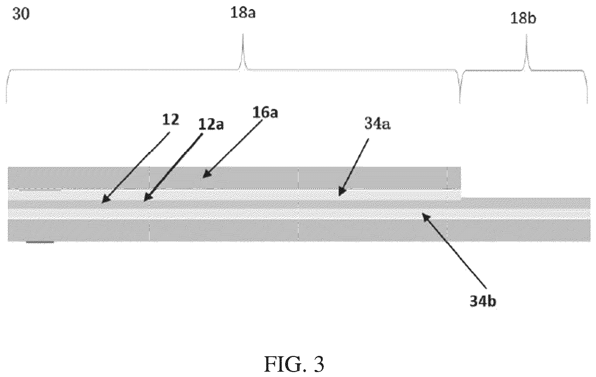

FIG. 3 shows a positive electrode 30 of an electrochemical device according to some embodiments of this application. A positive electrode 30 shown in FIG. 3 differs from that shown in FIG. 1 in that the entire second region 18b on the first surface 12a of the current collector 12 in the positive electrode 30 in FIG. 3 is not covered by the first protective layer 34a.

In some embodiments, in a fully charged state of the electrochemical device, a resistance value of the positive electrode in the first region 18a is R1 Ω, and 1.5≤R1≤10.5. In some embodiments, R1 is 1.5, 2, 2.5, 3, 3.5, 4, 4.5, 5, 5.5, 6, 6.5, 7, 7.5, 8, 8.5, 9, 9.5, 10, or 10.5, or falls within a range defined by any two of the foregoing values. In this case, the electrochemical device can have both excellent electrochemical performance and safety performance.

In some embodiments, a resistance value of the positive electrode in the second region 18b is R2 Ω, and 1≤R2≤10. In some embodiments, R1 is 1, 1.5, 2, 2.5, 3, 3.5, 4, 4.5, 5, 5.5, 6, 6.5, 7, 7.5, 8, 8.5, 9, 9.5, or 10, or falls within a range defined by any two of the foregoing values. In this case, the electrochemical device can have excellent safety performance.

In some embodiments, the first protective layer includes first inorganic particles, a first binder, and a first conductive agent.

In some embodiments, the second protective layer includes second inorganic particles, a second binder, and a second conductive agent.

In some embodiments, the first inorganic particles and/or the second inorganic particles include at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite (boehmite), aluminum hydroxide, magnesium hydroxide, calcium hydroxide, diaspore, barium sulfate, calcium sulfate, or calcium silicate.

In some embodiments, based on a mass of the first protective layer, a mass percentage of the first inorganic particles is 60% to 99%. In some embodiments, the mass percentage of the first inorganic particles is 60%, 65%, 70%, 75%, 80%, 85%, 90%, 95%, or 99%, or falls within a range defined by any two of the foregoing values.

In some embodiments, based on a mass of the second protective layer, a mass percentage of the second inorganic particles is 60% to 99%. In some embodiments, the mass percentage of the second inorganic particles is 60%, 65%, 70%, 75%, 80%, 85%, 90%, 95%, or 99%, or falls within a range defined by any two of the foregoing values.

In some embodiments, the first binder includes a polymer formed by at least one of acrylic acid, acrylamide, acrylate salt, acrylonitrile, or acrylate ester.

In some embodiments, the first binder includes at least one of carboxymethyl cellulose salt or nitrile rubber.

In some embodiments, the second binder includes a polymer formed by at least one of acrylic acid, acrylamide, acrylate salt, acrylonitrile, or acrylate ester.

In some embodiments, the second binder includes at least one of carboxymethyl cellulose salt or nitrile rubber.

In some embodiments, the first binder is a water-based binder. In some embodiments, the second binder is a water-based binder. In this case, the first binder and/or the second binder has good hydrophilicity and oleophobicity, so that the first protective layer and/or the second protective layer has excellent adhesion and stability in an oily electrolyte, thereby improving the safety performance of the electrochemical device.

In some embodiments, based on the mass of the first protective layer, a mass percentage of the first binder is 0.5% to 22%. In some embodiments, based on the mass of the first protective layer, the mass percentage of the first binder is 5% to 15%. In some embodiments, the mass percentage of the first binder is 0.5%, 1%, 2%, 3%, 4%, 5%, 6%, 7%, 8%, 9%, 10%, 11%, 12%, 13%, 14%, 15%, 16%, 17%, 18%, 19%, 20%, 21%, or 22%, or falls within a range defined by any two of the foregoing values. In some embodiments, based on the mass of the second protective layer, a mass percentage of the second binder is 0.5% to 22%. In some embodiments, the mass percentage of the second binder is 0.5%, 1%, 2%, 3%, 4%, 5%, 6%, 7%, 8%, 9%, 10%, 11%, 12%, 13%, 14%, 15%, 16%, 17%, 18%, 19%, 20%, 21%, or 22%, or falls within a range defined by any two of the foregoing values. Adjusting the mass percentages of the binders in the protective layers can ensure good adhesion between the positive electrode active material layer, the protective layer, and the current collector, reducing the loosening and even falling-off of the positive electrode active material layer under abnormal conditions, thereby improving the nail penetration safety performance and electrochemical performance of the electrochemical device.

In some embodiments, the first conductive agent and/or the second conductive agent includes at least one of a lamellar conductive agent, a reticular conductive agent, a fibrous conductive agent, or a particulate conductive agent. In some embodiments, the first conductive agent and/or the second conductive agent includes at least one of graphene (GN for short), graphite fiber, carbon nanotubes (CNT for short), Ketjen black, or conductive carbon (SP for short).

In some embodiments, based on the mass of the first protective layer, a mass percentage of the first conductive agent is 0.1% to 11%. In some embodiments, the mass percentage of the first conductive agent is 0.1%, 0.4%, 0.6%, 0.8%, 1%, 1.6%, 1.8%, 2%, 3%, 4%, 5%, 6%, 7%, 9%, 10%, or 11%, or falls within a range defined by any two of the foregoing values. In some embodiments, based on the mass of the second protective layer, a mass percentage of the second conductive agent is 0.1% to 11%. In some embodiments, the mass percentage of the second conductive agent is 0.1%, 0.4%, 0.6%, 0.8%, 1%, 1.6%, 1.8%, 2%, 3%, 4%, 5%, 6%, 7%, 9%, 10%, or 11%, or falls within a range defined by any two of the foregoing values.

In some embodiments, the first protective layer further includes a first leveling agent. In some embodiments, the second protective layer further includes a second leveling agent. In some embodiments, the first leveling agent and/or the second leveling agent includes at least one of a siloxane compound, a siloxane derivative, an oxygen-containing olefin polymer, a carboxylate ester compound, a carboxylate salt compound, an alcohol compound, an ether compound, or a fluorocarbon compound. In some embodiments, based on the mass of the first protective layer, a mass percentage of the first leveling agent is greater than 0% and less than or equal to 5%. In some embodiments, the mass percentage of the first leveling agent is 0.001%, 0.01%, 0.02%, 0.03%, 0.04%, 0.05%, 0.06%, 0.07%, 0.08%, 0.09%, 0.1%, 0.2%, 0.3%, 0.4%, 0.5%, 1%, 1.5%, 2%, 2.5%, 3%, 3.5%, 4%, 4.5%, or 5%, or falls within a range defined by any two of the foregoing values. In some embodiments, based on the mass of the second protective layer, a mass percentage of the second leveling agent is greater than 0% and less than or equal to 5%. In some embodiments, the mass percentage of the second leveling agent is 0.001%, 0.01%, 0.02%, 0.03%, 0.04%, 0.05%, 0.06%, 0.07%, 0.08%, 0.09%, 0.1%, 0.2%, 0.3%, 0.4%, 0.5%, 1%, 1.5%, 2%, 2.5%, 3%, 3.5%, 4%, 4.5%, or 5%, or falls within a range defined by any two of the foregoing values. The leveling agent added is conducive to forming a uniform and smooth protective layer, increasing a contact area between the protective layer, the current collector, and the positive electrode active material layer, and improving the safety performance of the electrochemical device.

In some embodiments, the positive electrode active material layer includes an active substance, a third binder, and a third conductive agent.

In some embodiments, the active substance includes lithium cobaltate (LCO for short). In some embodiments, based on a mass of the positive electrode active material layer, a mass percentage of the active substance is 94% to 99%. In some embodiments, based on the mass of the positive electrode active material layer, the mass percentage of the active substance is 94%, 94.5%, 95%, 95.5%, 96%, 96.5%, 97%, 97.5%, 98%, 98.5%, or 99%, or falls within a range defined by any two of the foregoing values.

In some embodiments, the third binder includes at least one of polyvinylidene fluoride (PVDF for short), nitrile rubber, or polyacrylate. In some embodiments, based on the mass of the positive electrode active material layer, a mass percentage of the third binder is 0.5% to 2.5%. In some embodiments, based on the mass of the positive electrode active material layer, the mass percentage of the third binder is 0.5%, 1%, 1.5%, 2%, or 2.5%, or falls within a range defined by any two of the foregoing values.

In some embodiments, the third conductive agent includes at least one of graphene, graphite fiber, carbon nanotubes, Ketjen black, or conductive carbon. In some embodiments, based on the mass of the positive electrode active material layer, a mass percentage of the third conductive agent is 0.5% to 3.5%. In some embodiments, based on the mass of the positive electrode active material layer, the mass percentage of the third conductive agent is 0.5%, 1%, 1.5%, 2%, 2.5%, 3%, or 3.5%, or falls within a range defined by any two of the foregoing values.

In this application, the protective layer is disposed between the positive electrode current collector and the positive electrode active material layer of the electrochemical device, and the coverage of the protective layer on the current collector is controlled, so that the safety of the electrochemical device in the process of being subjected to impacts or punctures due to external forces can be improved. In addition, an application method of the protective layer can also be simplified, and the processing efficiency is improved.

The electrochemical device of this application further includes a separator, an electrolyte, and a negative electrode.

In some embodiments, the electrochemical device of this application includes a primary battery or a secondary battery. In some embodiments, the electrochemical device is a lithium secondary battery. In some embodiments, the lithium secondary battery includes but is not limited to a lithium metal secondary battery, a lithium-ion secondary battery, a lithium polymer secondary battery, or a lithium-ion polymer secondary battery.

### II. Method for preparing the foregoing electrochemical device

The method for preparing the electrochemical device of this application is described in detail below by taking a lithium-ion battery as an example.

Preparation of negative electrode: A negative electrode active substance (at least one of a carbon material, a silicon material, or lithium titanate), a negative electrode binder, and a selectable conductive material are dispersed in a solvent system according to a specified mass ratio, stirred and mixed well, and then applied on a negative electrode current collector, followed by drying and cold pressing, to obtain a negative electrode.

Preparation of positive electrode: (1) Inorganic particles, a first conductive agent, a first binder, and a selectable leveling agent are added into a solvent and mixed well to obtain a slurry for a protective layer (hereinafter referred to as "first slurry"). (2) The first slurry obtained in step (1) is applied on a target region of a positive electrode current collector. (3) The positive electrode current collector obtained in step (2) and provided with the first slurry is dried to remove the solvent, thereby obtaining a positive electrode current collector coated with the protective layer. (4) An active substance, a third conductive agent, and a third binder are dispersed in a solvent system according to a specified mass ratio, and stirred and mixed well to obtain a slurry for a positive electrode active substance (hereinafter referred to as "second slurry"). (5) The second slurry is applied on a target region of the positive electrode current collector obtained in step (3) and coated with the protective layer. (6) The positive electrode current collector containing the second slurry and obtained in step (5) is dried to remove the solvent, thereby obtaining a desired positive electrode.

Types of the inorganic particles, the first conductive agent, the first binder, the active substance, the third conductive agent, and the third binder are as described above.

In some embodiments, examples of the solvent include but are not limited to N-methylpyrrolidone, acetone, or water. In some embodiments, an amount of the solvent can be adjusted appropriately.

In some embodiments, the current collector has a thickness in a range of 3 microns to 20 microns, but this disclosure is not limited thereto. The current collector is not particularly limited, as long as the current collector is conductive and does not cause adverse chemical changes in a manufactured battery. Examples of the current collector include copper, stainless steel, aluminum, nickel, titanium, or alloy (for example, copper-nickel alloy), but this disclosure is not limited thereto. In some embodiments, a surface of the current collector may include fine irregularities (for example, surface roughness) to enhance the adhesion of the surface of the current collector to the active substance. In some embodiments, the current collector can be used in various forms, and examples of the current collector include films, sheets, foils, meshes, porous structures, foams, or non-woven fabrics, but this disclosure is not limited thereto.

Separator: In some embodiments, a polyethylene (PE for short) porous polymer film is used as a separator. In some embodiments, a material of the separator may include glass fiber, polyester, polyethylene, polypropylene, polytetrafluoroethylene, or a combination thereof. In some embodiments, pores in the separator have diameters in a range of 0.01 micron to 1 micron, and a thickness of the separator is in a range of 5 microns to 500 microns.

Electrolyte: In some embodiments, the electrolyte includes an organic solvent, a lithium salt, and an additive. In some embodiments, the organic solvent includes at least one of ethylene carbonate (EC for short), propylene carbonate (PC for short), diethyl carbonate (DEC for short), ethyl methyl carbonate (EMC for short), dimethyl carbonate (DMC for short), propylene carbonate, or ethyl propionate. In some embodiments, the lithium salt includes at least one of an organic lithium salt or an inorganic lithium salt. In some embodiments, the lithium salt includes at least one of lithium hexafluorophosphate (LiPF₆), lithium tetrafluoroborate (LiBF₄), lithium difluorophosphate (LiPO₂F₂), lithium bistrifluoromethanesulfonimide LiN(CF₃SO₂)₂ (LiTFSI), lithium bis(fluorosulfonyl)imide Li(N(SO₂F)₂) (LiFSI), lithium bis(oxalate) borate LiB(C₂O₄)₂ (LiBOB), or lithium difluoro(oxalato)borate LiBF₂(C₂O₄) (LiDFOB).

The positive electrode, the separator, and the negative electrode are stacked in sequence, so that the separator is sandwiched between the positive electrode and the negative electrode for separation, and the resulting stack is wound to obtain a jelly roll. The jelly roll obtained by winding is placed in an outer package, the electrolyte is injected, and packaging is performed, followed by processes such as formation, degassing, and trimming, to obtain a lithium-ion battery.

### III. Electronic device

This application provides an electronic device including the electrochemical device as described above.

According to some embodiments of this application, the electronic device includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, and a lithium-ion capacitor.

### IV. Specific examples

The following further describes this application in detail with reference to some examples. However, it should be understood that the following examples are merely illustrative, and all embodiments of this application are not limited thereto.

### Examples 1 to 30 and comparative examples 1 and 2

### Preparation of positive electrode

Step (1): Inorganic particles (boehmite, with a mass percentage of 90.9%), a first conductive agent (SP, with a mass percentage of 1%), a first binder (40% acrylonitrile+45% sodium acrylate+15% acrylamide) polymer, with a mass percentage of 8%), and a leveling agent (polydimethylsiloxane, with a mass percentage of 0.1%) were added into water and mixed well to obtain a slurry for a protective layer (hereinafter referred to as "first slurry").

Step (2): The first slurry obtained in step (1) was applied on a target region of a positive electrode current collector.

Step (3): The positive electrode current collector obtained in step (2) and provided with the first slurry was dried to remove the solvent, thereby obtaining a positive electrode current collector coated with the protective layer.

Step (4): An active substance (lithium cobaltate, with a mass percentage of 97.3%), a third conductive agent (conductive carbon (trade name Super P), with a mass percentage of 0.6%, and carbon nanotubes (CNT for short), with a mass percentage of 0.5%), and a third binder (polyvinylidene fluoride (PVDF for short), with a mass percentage of 1.6%) were dispersed in a solvent system and stirred and mixed well to obtain a slurry for a positive electrode active substance (hereinafter referred to as "second slurry").

Step (5): The second slurry was applied on a target region of the positive electrode current collector obtained in step (3) and coated with the protective layer.

Step (6): The positive electrode current collector containing the second slurry and obtained in step (5) was dried to remove the solvent, thereby obtaining a desired positive electrode.

### Preparation of electrochemical device

The preparation of the positive electrode of the electrochemical device was as described above.

Negative electrode: An active substance artificial graphite, a conductive agent acetylene black, a binder styrene-butadiene rubber (SBR), and a thickener sodium carboxymethyl cellulose (CMC) were stirred and mixed well in water at a mass ratio of 95:2:2:1, and then the resulting mixture was applied on a Cu foil, followed by drying and cold pressing to obtain a negative electrode plate.

Electrolyte: In an argon glove box with a moisture content less than 10 ppm, ethylene carbonate (EC for short), diethyl carbonate (DEC for short), and propylene carbonate (PC for short) were mixed well at a weight ratio of 2:6:2, then a fully dried lithium salt LiPF₆ was dissolved in the above solvent, and then 1,3-propane sultone, fluoroethylene carbonate, and adiponitrile were added. After the substances were mixed, a percentage of LiPF₆ was 12.5%, a percentage of 1,3-propane sultone was 1.5%, a percentage of fluoroethylene carbonate was 3%, and a percentage of adiponitrile was 2%, where the percentages of the substances were calculated based on a total weight of the electrolyte.

Separator: A polyethylene (PE for short) porous polymer film was used as the separator.

The positive electrode, the separator, and the negative electrode were stacked in sequence, so that the separator was sandwiched between the positive electrode and the negative electrode for separation. The resulting stack was wound and placed in an outer package. Then, the prepared electrolyte was injected, and packaging was performed, followed by processes such as formation, degassing, and trimming, to obtain a lithium-ion battery.

### Performance test method

The coverage of the first protective layer on the first surface of the current collector was A3/(A1+A2), a relative proportion of the second region to the first region was A2/A1, the coverage of the first protective layer on the first region was B1/A1, the coverage of the first protective layer on the second region was B2/A2, the coverage of the second protective layer on the third region was C1/A1, and the coverage of the second protective layer on the fourth region was C2/A2.
**(1) In** an environment at (25±3)°C, the positive electrode plate coated with the protective layer was disassembled from the lithium-ion battery, and the residual electrolyte on the surface of the positive electrode plate was wiped off with dust-free paper.
(2) The area of the first region coated with the positive electrode active material layer on the first surface of the positive electrode current collector was measured as A1 cm², and the area of the second region uncoated with the positive electrode active material layer was measured as A2 cm².
(3) The positive electrode plate was immersed in N-methylpyrrolidone (NMP), the positive electrode active material layer on the surface of the positive electrode plate was washed off, the area of the first protective layer on the first surface of the positive electrode current collector was measured as A3 cm², the area of the first protective layer on the first region was measured as B1 cm², the area of the first protective layer on the second region was measured as B2 cm², the area of the second protective layer on the third region opposite to the first region was measured as C1 cm², and the area of the second protective layer on the fourth region opposite to the third region was measured as C2 cm².
(4) Calculation was performed to obtain the corresponding A3/(A1+A2), A2/A1, B1/A1, B2/A2, C1/A1, and C2/A2.

### Positive electrode resistance in fully charged state

(1) The lithium-ion battery was charged to a fully charged design voltage of 4.45 V at a constant current of 0.05C, and then charged to a current of 0.025C (cut-off current) at a constant fully charged design voltage of 4.45 V, so that the lithium-ion battery reached a fully charged state.
(2) The lithium-ion battery was disassembled to obtain the positive electrode.
(3) The positive electrode obtained in step (2) was placed in an environment with a humidity of 5% to 15% for 30 min, then sealed and transferred to a resistance testing location.
(4) A BER1200 sheet resistance tester was used to test the resistance of the positive electrode obtained in step (3) in the first region, at least 15 different points were randomly tested, and average resistance of all the test points was recorded as the resistance R1 of the positive electrode in the first region.
(5) The BER1200 sheet resistance tester was used to test the resistance of the positive electrode obtained in step (3) in the second region, adjacent test points were spaced apart by 2 mm to 3 mm, at least 15 different points were tested, and average resistance of all the test points was recorded as the resistance R2 of the positive electrode in the second region.

The resistance test parameters were as follows: an area of a pressing head was 153.94 mm², pressure was 3.5 t, and a holding time was 50s.

### Central nail penetration pass rate

The lithium-ion battery under test was charged to a fully charged design voltage of 4.45 V at a constant current of 0.05C, and then charged to a current of 0.025C (cut-off current) at a constant fully charged design voltage of 4.45 V, so that the lithium-ion battery reached a fully charged state. The appearance of the lithium-ion battery before testing was recorded. Nail penetration test was conducted on the battery in an environment at 25±3°C, where a steel nail had a diameter of 4 mm, a penetration speed was 30 mm/s, and a nail penetration position was located at the geometric center of the lithium-ion battery. The test lasted for 3.5 min or the test was stopped after a surface temperature of an electrode assembly dropped to 50°C. 20 lithium-ion batteries were used as a group, the states of the lithium-ion batteries during the test were observed, and the lithium-ion batteries having no combustion or explosion were considered as passing the test. Central nail penetration pass rate=number of passes/20.

### Discharge rate at 2C

(1) At 25±2°C, the lithium-ion battery was discharged to 3.0 V at a constant current of 0.5C, then fully charged to a design voltage of 4.45 V at a rate of 0.5C, and then charged to a current of 0.02C at a constant design voltage of 4.45 V.
(2) The lithium-ion battery in step (1) was left standing for 10 min and then discharged to 3.0 V at a rate of 0.2C, and a discharge capacity was recorded as C0.
(3) The lithium-ion battery in step (2) was left standing for 5 min, then fully charged to the design voltage of 4.45 V at the rate of 0.5C, and then charged to the current of 0.02C at the constant design voltage of 4.45 V.
(4) The lithium-ion battery in step (3) was left standing for 10 min and then discharged to 3.0 V at a rate of 2C, and a discharge capacity was recorded as C1.
(5) Discharge rate at 2C was C1/C0×100%.

Table 1 specifically shows application difference of the protective layers and the performance of the corresponding lithium-ion batteries in examples 1 to 30 and comparative examples 1 and 2.

**Table 1**

| | A3/(A1+A2) | A2/A1 | B1/A1 | B2/A2 | C1/A1 | C2/A2 | Protective layer thickness T (µm) | Fully charged first region resistance R1 (Ω) | Fully charged second region resistance R2 (Ω) | Discharge rate at 2C | Central nail penetration pass rate |
|---|---|---|---|---|---|---|---|---|---|---|---|
| Example 1 | 100.0% | 0% | 100% | \ | 0% | 0% | 2.5 | 3 | \ | 92.5% | 14/20 |
| Example 2 | 90% | 0% | 90% | \ | 0% | 0% | 2.5 | 3 | \ | 92.8% | 14/20 |
| Example 3 | 80% | 0% | 80% | \ | 0% | 0% | 2.5 | 3 | \ | 93.3% | 13/20 |
| Example 4 | 70% | 0% | 70% | \ | 0% | 0% | 2.5 | 3 | \ | 93.7% | 12/20 |
| Example 5 | 60% | 0% | 60% | \ | 0% | 0% | 2.5 | 3 | \ | 94.1% | 12/20 |
| Example 6 | 50% | 0% | 50% | \ | 0% | 0% | 2.5 | 3 | \ | 94.5% | 10/20 |
| Example 7 | 100.0% | 5% | 100% | 100% | 100% | 100% | 2.5 | 5.5 | 2.5 | 91.3% | 20/20 |
| Example 8 | 100.0% | 5% | 100% | 100% | 100% | 100% | 3 | 7 | 5 | 90.8% | 20/20 |
| Example 9 | 100.0% | 5% | 100% | 100% | 100% | 100% | 5 | 10 | 9.5 | 90.3% | 20/20 |
| Example 10 | 99.5% | 5% | 100% | 90% | 100% | 100% | 2.5 | 5.5 | 2.5 | 91.4% | 20/20 |
| Example 11 | 97.6% | 5% | 100% | 50% | 100% | 100% | 2.5 | 5.5 | 2.5 | 91.7% | 18/20 |
| Example 12 | 95.2% | 5% | 100% | 0% | 100% | 100% | 2.5 | 5.5 | \ | 91.8% | 16/20 |
| Example 13 | 90.5% | 5% | 90% | 100% | 100% | 100% | 2.5 | 5.5 | 2.5 | 92% | 18/20 |
| Example 14 | 89.5% | 5% | 90% | 80% | 100% | 100% | 2.5 | 5.5 | 2.5 | 92.3% | 16/20 |
| Example 15 | 81.0% | 5% | 80% | 100% | 100% | 100% | 2.5 | 5.5 | 2.5 | 92.4% | 16/20 |
| Example 16 | 78.6% | 5% | 80% | 50% | 100% | 100% | 2.5 | 5.5 | 2.5 | 92.6% | 14/20 |
| Example 17 | 70.5% | 5% | 70% | 80% | 100% | 100% | 2.5 | 5.5 | 2.5 | 93.3% | 12/20 |
| Example 18 | 60.9% | 10% | 60% | 70% | 100% | 100% | 2.5 | 5.5 | 2.5 | 94.1% | 20/20 |
| Example 19 | 50.0% | 20% | 50% | 50% | 100% | 100% | 2.5 | 5.5 | 2.5 | 94.3% | 20/20 |
| Example 20 | 100.0% | 8% | 100% | 100% | 100% | 100% | 2.5 | 5.5 | 5 | 91.1% | 20/20 |
| Example 21 | 100.0% | 8% | 100% | 100% | 100% | 90% | 2.5 | 5.5 | 2.5 | 91.2% | 20/20 |
| Example 22 | 100.0% | 8% | 100% | 100% | 100% | 50% | 2.5 | 5.5 | 2.5 | 91.1% | 18/20 |
| Example 23 | 100.0% | 8% | 100% | 100% | 100% | 0% | 2.5 | 5.5 | 1.5 | 91% | 14/20 |
| Example 24 | 100.0% | 8% | 100% | 100% | 90% | 100% | 2.5 | 5.5 | 2.5 | 90.8% | 18/20 |
| Example 25 | 100.0% | 8% | 100% | 100% | 90% | 80% | 2.5 | 5.5 | 2.5 | 91.2% | 16/20 |
| Example 26 | 100.0% | 8% | 100% | 100% | 80% | 100% | 2.5 | 5.5 | 2.5 | 91.5% | 16/20 |
| Example 27 | 100.0% | 8% | 100% | 100% | 80% | 50% | 2.5 | 5.5 | 2.5 | 91.7% | 15/20 |
| Example 28 | 100.0% | 8% | 100% | 100% | 70% | 80% | 2.5 | 5.5 | 2.5 | 92.3% | 14/20 |
| Example 29 | 100.0% | 8% | 100% | 100% | 60% | 70% | 2.5 | 5.5 | 2.5 | 92.9% | 14/20 |
| Example 30 | 100.0% | 8% | 100% | 100% | 50% | 50% | 2.5 | 5.5 | 2.5 | 93.7% | 14/20 |
| Comparative example 1 | 0% | 0% | 0% | \ | 0% | \ | \ | \ | \ | 94.9% | 0/20 |
| Comparative example 2 | 42.9% | 5% | 40% | 100% | 0% | 0% | 2.5 | 3 | 2.5 | 94.6% | 4/20 |

Investigation of influence of protective layer coverage on performance of electrochemical device

It can be seen from the comparison of examples 1 to 6 and comparative examples 1 and 2 in the above Table 1 that when the coverage degree A3/(A1+A2) of the first protective layer on the first surface (where A3 represents the area of the first protective layer, A1 represents the region of the first surface where the positive electrode active material layer is provided, and A2 represents the region of the first surface where the positive electrode active material layer is not provided) is controlled to be greater than or equal to 50%, the significantly increased central nail penetration pass rate can be provided under a condition that a discharge rate equivalent to that of the lithium-ion battery uncoated with the first protective layer is maintained. This is because when 0.5≤A3/(A1+A2)≤1 is satisfied, the first surface of the positive electrode current collector can be sufficiently protected by the first protective layer., the first protective layer can isolate the conduction between the positive electrode current collector and the negative electrode active material layer, thereby suppressing the occurrence of the most dangerous short circuit between the positive electrode current collector and the negative electrode active material layer, and improving the safety performance of the electrochemical device. In addition, in the fully charged state, the resistance R1 of the positive electrode in the first region is greater than or equal to 3 Ω, which can provide higher contact resistance at the puncture site, reducing the short circuit current and reducing the heat generated by the battery, thereby increasing the central nail penetration pass rate of the lithium-ion battery.

On the other hand, it can be seen from the comparison of example 1 and examples 7 to 17 in the above Table 1 that when the positive electrode further satisfies 0.8≤B1/A1≤1 and 0.5≤B2/A2≤1, the central nail penetration pass rate of the corresponding lithium-ion battery can be further increased. This is because when a puncturing object pierces the first region, if a short circuit occurs between the positive electrode current collector and the negative electrode active material layer, due to the presence of the positive electrode active material layer on the first region, the electron conduction path is short in this case, and the instantaneous short circuit current will be excessively high, so that fires and explosions are easily caused. When 0.8≤B1/A1≤1 is satisfied, the first region of the positive electrode current collector can be sufficiently protected by the first protective layer, suppressing the occurrence of a short circuit between the positive electrode current collector and the negative electrode active material layer in the first region, thereby increasing the central nail penetration pass rate of the lithium-ion battery. When 0.5≤B2/A2≤1, the second region can be sufficiently protected by the first protective layer, suppressing the occurrence of the short circuit between the positive electrode current collector and the negative electrode active material layer in the second region, thereby further improving the safety performance of the electrochemical device.

In addition, it can be seen from the comparison of examples 20 to 30 in the above Table 1 that the lithium-ion battery satisfying 0.8≤C1/A1≤1 and/or 0.5≤C2/A2≤1 can have further increased central nail penetration pass rate. In this case, the third region and/or the fourth region can be sufficiently protected by the second protective layer, reducing the risk that the separator is pierced by burrs formed on the second surface where the positive electrode current collector is pierced in the puncture process, which otherwise leads to the most dangerous short circuit between the positive electrode current collector and the negative electrode active material layer, thereby improving the safety performance of the lithium-ion battery.

References to "some embodiments", "some of all embodiments", "an embodiment", "another example", "examples", "specific examples", or "some examples" in this specification mean the inclusion of specific features, structures, materials, or characteristics described in at least one embodiment or example of this application in this embodiment or example. Therefore, descriptions in various places throughout this specification, such as "in some embodiments", "in these embodiments", "in an embodiment", "in another example", "in an example", "in a specific example", or "examples" do not necessarily refer to the same embodiment or example in this application. In addition, specific features, structures, materials, or characteristics herein may be combined in any appropriate manner in one or more embodiments or examples.

Although illustrative embodiments have been demonstrated and described, persons skilled in the art should understand that the foregoing embodiments cannot be construed as limitations on this application, and that these embodiments may be changed, replaced, and modified without departing from the spirit, principle, and scope of this application.

## Claims

1. An electrochemical device, comprising a positive electrode, wherein the positive electrode comprises:
a positive electrode current collector, a first protective layer, and a first positive electrode active material layer, wherein
the positive electrode current collector comprises a first surface and a second surface opposite to each other, and the first protective layer is disposed between the first surface and the first positive electrode active material layer; and
the first surface comprises a first region and a second region, the first region is provided with the first positive electrode active material layer, the second region is not provided with the first positive electrode active material layer, an area of the first region is A1 cm², an area of the second region is A2 cm², and an area of the first protective layer is A3 cm², satisfying: 0.5≤A3/(A1+A2)≤1.

2. The electrochemical device according to claim 1, wherein the positive electrode is a wound structure, the wound structure comprises a winding start end located on an inner side of the wound structure and a winding termination end located on an outer side of the wound structure, the second region is located at the winding termination end, and 0<A2/A1≤0.2.

3. The electrochemical device according to claim 1, wherein an area of the first protective layer on the first region is B1 cm², satisfying: 0.8≤B1/A1≤1.

4. The electrochemical device according to claim 1, wherein an area of the first protective layer on the second region is B2 cm², satisfying: 0.5≤B2/A2≤1.

5. The electrochemical device according to claim 1, wherein the positive electrode further comprises a second positive electrode active material layer and a second protective layer located between the second surface and the second positive electrode active material layer; the second surface comprises a third region opposite to the first region and a fourth region opposite to the second region; and an area of the second protective layer on the third region is C1, and an area of the second protective layer on the fourth region is C2, satisfying: 0.8≤C1/A1≤1, and/or 0.5≤C2/A2≤1.

6. The electrochemical device according to claim 1, wherein in a fully charged state of the electrochemical device, a resistance value of the positive electrode in the first region is R1 Ω, and a resistance value of the positive electrode in the second region is R2 Ω, satisfying: 1.5≤R1≤10.5; and/or 1≤R2≤10.

7. The electrochemical device according to claim 5, wherein the first protective layer comprises first inorganic particles, a first binder, and a first conductive agent; and/or the second protective layer comprises second inorganic particles, a second binder, and a second conductive agent.

8. The electrochemical device according to claim 7, wherein the first binder and/or the second binder satisfies at least one of the following characteristics:
(1) a polymer formed by at least one of acrylic acid, acrylamide, acrylate salt, acrylonitrile, or acrylate ester is comprised; or
(2) at least one of carboxymethyl cellulose salt or nitrile rubber is comprised.

9. The electrochemical device according to claim 7, wherein the electrochemical device satisfies at least one of the following characteristics:
(a) the first binder and/or the second binder is a water-based binder;
(b) the first inorganic particles and/or the second inorganic particles comprise at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, diaspore, barium sulfate, calcium sulfate, or calcium silicate; or
(c) the first conductive agent and/or the second conductive agent comprises at least one of a lamellar conductive agent, a reticular conductive agent, a fibrous conductive agent, or a particulate conductive agent.

10. The electrochemical device according to claim 7, wherein the electrochemical device satisfies at least one of the following characteristics:
(d) based on a mass of the first protective layer, a mass percentage of the first inorganic particles is 60% to 99%;
(e) based on a mass of the second protective layer, a mass percentage of the second inorganic particles is 60% to 99%;
(f) based on the mass of the first protective layer, a mass percentage of the first binder is 0.5% to 22%;
(g) based on the mass of the second protective layer, a mass percentage of the second binder is 0.5% to 22%;
(h) based on the mass of the first protective layer, a mass percentage of the first conductive agent is 0.1% to 11%; or
(i) based on the mass of the second protective layer, a mass percentage of the second conductive agent is 0.1% to 11%.

11. The electrochemical device according to claim 7, wherein the first protective layer further comprises a first leveling agent, and/or the second protective layer further comprises a second leveling agent, satisfying at least one of the following characteristics:
(j) based on a mass of the first protective layer, a mass percentage of the first leveling agent is greater than 0% and less than or equal to 5%;
(k) based on a mass of the second protective layer, a mass percentage of the second leveling agent is greater than 0% and less than or equal to 5%; or
(1) the first leveling agent and/or the second leveling agent comprises at least one of a siloxane compound, a siloxane derivative, an oxygen-containing olefin polymer, a carboxylate ester compound, a carboxylate salt compound, an alcohol compound, an ether compound, or a fluorocarbon compound.

12. An electronic device, comprising the electrochemical device according to any one of claims 1 to 11.
